# EUROPEAN PATENT APPLICATION

(11) **EP 2 236 947 A2**
(43) Date of publication of application: **06.10.2010**
(21) Application number: 10156971.3
(22) Date of filing: 18.03.2010
(51) Int. Cl.: F24D 12/02, F24H 6/00, F24H 8/00

(54) **Heating system**

(30) Priority: 20.03.2009 GB 0904794
(71) Applicant: Ravenheat Manufacturing Limited, Leeds, West Yorkshire LS27 9ET (GB)
(72) Inventor: Pickersgill, Louis, Scarborough YO13 0 EL (GB)
(74) Representative: Lessard, Jason Donat

(57) **Abstract**

A water heating system that includes a burner unit (102) with an exhaust gas outlet (122), a primary heat exchanger (104) with primary passageways for carrying water to be heated by the burner unit (102) and an auxiliary heat exchanger (110, 108) having first passageways connected to the exhaust gas outlet (122). The auxiliary heat exchanger (108, 110) includes a secondary heat exchange unit (108) with second passageways for water and a tertiary heat exchange unit (110) with third passageways for liquid or water or air. The first passageways of the auxiliary heat exchanger (108, 110) are in heat transfer contact with the second passageways and with the third passageways.

## Description

This invention relates generally to heating systems and more specifically, although not exclusively, to heating systems incorporating heat exchangers for extracting heat from the exhaust gas of the burner unit of such heating systems.

Water is heated in many situations, including in a domestic environment, to provide a source of hot water for washing, to provide a source of hot water for space heating purposes and other purposes. To do so, fuel is burned and the heat generated by the flame is used directly to heat passages containing water and so generate hot water. There are problems with the efficiency of such an approach to the heating of water. It is therefore a first non-exclusive object of this invention to recover extra heat from the exhaust gases of the combustion process. It is a further, general object of the invention to improve the efficiency of the combustion process.

Most modern houses are provided with a boiler which bums fuel to heat water. The heated water is used in two ways: to circulate through a heating system and so heat the house (space heating only mode); and to provide the hot water for a domestic hot water system (hot generating water mode), with that hot water being used for washing, bathing and the like. There is an increasing need to make such boilers as efficient as possible, so as to reduce running costs, fuel consumption and emissions.

In a so called "combi" boiler, the heat level in the heating system (space heating only mode) is topped up by the boiler as needed. A low level flame is used for this. However, the domestic hot water system is only provided with hot water as it is demanded (hot water generating mode), for instance when a tap is turned. During the hot water generating mode a higher level flame is provided as the water needs to be heated quickly from cold to hot. The domestic hot water travels directly from the "combi" boiler to the point where it is to be used. There can usually be a small or large amount of storage capacity.

There are examples of the cold water feed for a domestic hot water system in a "combi" boiler being contacted with the hot exhaust fumes from a boiler prior to passing to the heating location within the boiler and then on to the point of use. GB2420174 is such an example, however, the heating of the cold water by the exhaust fumes only occurs in such a system when the boiler is in hot water generating mode. Only then is there water flow through the piping that passes through the hot exhaust fumes. A small amount of the heat in the exhaust gas is thus extracted, with a small reduction in the amount that the domestic hot water has to be heated by to reach the desired temperature. Heating of the water using the conventional contact with the flame of the boiler is still essential to gain warm or hot water. The contact with the exhaust fumes is short and one off, so no useful warm or hot water is derived from that contact alone.

The present invention is applicable to the recovery of heat from the exhaust gases of combi boilers, but is equally applicable to the recovery of heat from the exhaust gases of other boiler types, including boilers which are intended for space heating only. The present invention is also applicable to improving the efficiency of a boiler by recovering heat from the exhaust gases to the feed air which is then fed to the boiler for burning.

According to a first aspect of the invention, there is provided a water heating system comprising:
a burner unit with an exhaust gas outlet;
a primary heat exchanger with primary passageways for water, the primary heat exchanger being located and/or configured to be heated, in use, by the burner unit; and
an auxiliary heat exchanger having one or more first passageways for exhaust gas, one or more second passageways for water and one or more third passageways for liquid or water or air;
wherein the one or more first passageways are connected to the exhaust gas outlet and are in heat transfer contact with the second passageways and with the third passageways.

This arrangement provides additional flexibility in that the exhaust gases may be used to heat two different water sources, a water and air source or even a water source and a glycol source, for example one may be used to pre-heat water prior to its introduction into the primary passageways while the other may be used for underfloor heating.

A second aspect of the invention provides an auxiliary heat exchanger for a water heating system comprising one or more first passageways for exhaust gas, one or more second passageways for water and one or more third passageways for liquid or water or air, wherein the one or more first passageways are connectable to an exhaust gas outlet and are in heat transfer contact with the second passageways and with the third passageways.

A third aspect of the invention provides a water heating system comprising:
a burner unit having an air inlet and an exhaust gas outlet; and
a heat exchanger, e.g. an auxiliary heat exchanger, having one or more first passageways for exhaust gas, one or more second passageways for water and one or more third passageways for air, the first passageways being in heat transfer contact with the second passageways and with the third passageways;
wherein the one or more first passageways are connected to the exhaust gas outlet and the third passageways are connected to the air inlet.

The first passageways may be in heat transfer contact with the second passageways upstream of the heat transfer contact between the first and third passageways. For example, the heat exchanger or auxiliary heat exchanger may comprise a secondary heat exchange unit including the second passageways and a portion of the first passageways and/or may comprise a tertiary heat exchange unit including the third passageways and a portion of the first passageways. The second and third heat exchange units may be separate units, e.g. separate heat exchangers or heat exchange modules, wherein the first passageways of one of the units or modules or heat exchangers is connected or connectable to the first passageways of the other unit or module or heat exchanger. Alternatively, the heat exchanger or auxiliary heat exchanger may comprise an integral heat exchange unit including the first, second and third passageways. Alternatively, the secondary passageways may be connected to the third passageways.

The heating system according to the third aspect of the invention may further comprise a primary heat exchanger, for example upstream of the heat exchanger or auxiliary heat exchanger.

The primary heat exchanger may include one or more passageways for exhaust gas and/or one or more passageways for water which may be in heat transfer contact with the one or more passageways for exhaust gas. The one or more passageways for exhaust gas of the primary heat exchanger may be connected to the first passageways.

The primary heat exchanger may provide heat transfer contact between the burner, for example gas heated directly by the burner, and one or more water containing passageways, e.g. the primary passageways. The exhaust gas may pass through the primary heat exchanger before passing through the secondary heat exchange unit. The secondary heat exchange unit may provide for heat passage from exhaust gas to water. The exhaust gas may pass through the primary heat exchanger before passing through the tertiary heat exchange unit and/or may pass through the secondary heat exchange unit before passing through the tertiary heat exchange unit. Advantageously, the tertiary heat exchange unit may provide for heat passage from exhaust gas to liquid or water or air.

The secondary heat exchange unit may be positioned adjacent the tertiary heat exchange unit, for instance alongside it, and/or may be provided in or as a common unit, for example they may be an integral unit and/or may be provided within a casing, which casing may further include a primary heat exchanger and/or the or a burner unit and/or a hot water storage location.

In some embodiments, the secondary heat exchange unit is connected to the tertiary heat exchange unit by or via an intermediary unit. The intermediary unit may comprise first passageways or a portion of the first passageways. The first passageways or first passageway portion of the intermediary unit may comprise a first inlet connected to the exhaust gas outlet and/or a first outlet connected to an inlet of the first passageway portion of the secondary heat exchange unit and/or a second inlet connected to an outlet of the first passageway portion of the secondary heat exchange unit and/or a second outlet connected to an inlet of the first passageway portion of the tertiary heat exchange unit and/or a third inlet connected to an outlet of the first passageway portion of the tertiary heat exchange unit and/or a third outlet.

Additionally or alternatively, the intermediary unit may comprise a first section connecting the exhaust gas outlet to an inlet of the first passageway portion of the secondary heat exchange unit. The intermediary unit may additionally or alternatively comprise a second section connecting an outlet of the first passageway portion of the secondary heat exchange unit to an inlet of the first passageway portion of the tertiary heat exchange unit. The intermediary unit may additionally or alternatively comprise a third section connecting an outlet of the first passageway portion of the tertiary heat exchange unit to the outside of the auxiliary heat exchanger. The intermediary section may be formed of plastics material and/or may be injection moulded. The moulding could be formed in two or more parts that are subsequently connected or bonded together and/or the intermediary section may be formed of one or more injection moulded components in combination with components fabricated from different methods or materials, e.g. formed sheet metal or the like.

The intermediary unit comprises one or more ports for allowing the removal of exhaust gas condensate and/or a drainage diverting means for causing, in use, exhaust gas condensate to flow toward the one or more ports. The system or auxiliary heat exchanger may include a reservoir, for example at or adjacent its base, e.g. into which reservoir the exhaust condensate collects or wherein the system or heat exchanger or drainage diverting means is arranged to divert the exhaust gas condensate thereto or therein. The base of the auxiliary heat exchanger or one or both of the secondary and/or tertiary heat exchangers may be at least partially located within the reservoir, e.g. to recover further heat from the condensate.

Advantageously, the heating system or the intermediary unit, e.g. the or the portion of the first passageways, may comprise one or more baffles or baffle plates e.g. for diverting fluid flow within one or more of the passageways and/or which is arranged to create a tortuous path through one or more of the passageways.

The heat exchanger or auxiliary heat exchanger may comprise one or more plates, preferably two or more plates, for example a plurality of plates, which may be arranged in a stack. The plates may have chambers extending along their major surface and/or length within the plates in which the fluid, preferably water or air, to be heated can flow or is arranged, in use, to flow. In one class of embodiments, one or more of the passageways are formed by a plurality of plates arranged in a stack. The baffle may comprise a baffle plate with fingers which extend, e.g. extend vertically and/or horizontally, between adjacent plates.

The baffle or baffles may be positioned towards the centre of the plates. Additionally or alternatively, the baffle or baffle plate may be orientated at an angle, which is preferably an angle other than a right angle to the plates, e.g. to divide the heat exchanger or auxiliary heat exchanger into two parts. The baffle plate may be angled towards the burner unit and/or primary heat exchanger and/or downward, for instance by up to 30°.

The flow path through the heat exchanger or auxiliary heat exchanger may have an initial section in which the exhaust gas enters the heat exchanger or auxiliary heat exchanger. The flow path may have a first section in which the exhaust gas is deflected. The first section may follow the initial section along the flow path. The deflection may be a deflection away from the horizontal and/or the direction of the initial section. The first section may be connected to a later section by a transition section. The flow path may change direction by at least 90°, preferably at least 170° and ideally at least 180° in the transition section. The later section of the flow path may be parallel to the first section +/-20° and/or may be in the opposing direction to the first section. The further section may be connected to a finals section. The final section may convey the flow path out of the heat exchanger or auxiliary heat exchanger, for instance to an exhaust gas vent. The final section may extent vertically +/-10°. The exhaust gas may pass from the secondary heat exchange unit to the tertiary heat exchange unit through a connection. The connection may be horizontal +/-10°.

The or the auxiliary heat exchanger may be provided with spacers by which adjacent plates in the stack may be held apart, e.g. to define spaces along which the exhaust gases can flow so as to exchange heat with the feed air to be heated through the walls of the plates. The baffle plate may be arranged to divide the passage through the heat exchanger or auxiliary heat exchanger, for example thereby forcing gases in one direction towards the plates on entry, e.g. with that direction then being reversed before the exhaust gases can exit the heat exchanger or auxiliary heat exchanger.

The heat exchanger or auxiliary heat exchanger may comprise a passage through which air passes and/or around which the exhaust gases pass. One or more such passages may be provided within the heat exchanger or auxiliary heat exchanger. One or more passages having a convoluted passage may be provided. One or more helical or coiled passageways may be provided.

The heat exchanger or auxiliary heat exchanger may be provided with a collector for water condensing from the exhaust gases, which collector may be connected to the hot water storage tank. An acidity regulator may be provided in conjunction with the collector.

The air flow path through the heat exchanger or auxiliary heat exchanger may be provided along an axis, preferably throughout the heat exchanger or auxiliary heat exchanger. The air flow path may be in through the top of the heat exchanger or auxiliary heat exchanger, for instance vertically +/-10°. The air flow path may be into the stack of plates through the top of the stack, for instance vertically +/-10°. The air flow may be substantially parallel through the stack of plates, for instance +I-10°. The air flow path may be out through the base of the heat exchanger or auxiliary heat exchanger, for instance vertically +I-10°.

Preferably the one or more air passageways in the heat exchanger or auxiliary heat exchanger are connected to a location at which fuel is burned. The connection may be by one or more conduits. Preferably the one or more air passageways in the heat exchanger or auxiliary heat exchanger are connected to the burner along a single conduit.

The air may be fed to the heat exchanger or auxiliary heat exchanger through an air inlet pipe. The air inlet pipe may be separate from any other pipe or passageway. The air inlet pipe and exhaust gas vent may be separate from one another and/or lack any thermal contact with one another, e.g. they may be thermally separate.

Preferably the system comprises multiple passageways carrying air are in thermal contact with multiple passageways carrying exhaust gas in the heat exchanger or auxiliary heat exchanger. The air inlet passage may be in thermal contact with the water of the hot water storage tank by providing a part of the air inlet passage in contact with the hot water storage tank or water thereof. The air inlet passage may be provided within the hot water storage tank over at least a part of its length. The air inlet passage may comprise one or more passages. The passage(s) may be linear or helical and/or convoluted.

The system may include a heat transfer circuit between the one or more passageways for water and a hot water storage location, such as a tank. The heat exchanger or auxiliary heat exchanger may be at least partially within the hot water storage tank.

The water heating system may be connected to one or more outlets. The water heating system may be connected to one or more sinks, baths or showers. The hot water storage tank may be connected to the one or more outlets directly or via the burner unit. The burner unit may be provided within a boiler. The burner unit may be provided with a cold water inlet and/or a hot water outlet which may be connected to the or a hot water storage tank and/or to one or more outlets, for instance one or more sinks, baths or showers.

Advantageously the system may comprise a temperature monitor for monitoring the water temperature. The system may be configured such that when the monitored temperature is below a threshold value, the system causes, in use, water to flow to the primary heat exchanger and/or through the burner unit. The burner unit may be arranged to heat the water. Preferably, the system is configured to cause, in use, water to flow from the primary heat exchanger and/or through the burner unit when the monitored temperature is below a threshold value.

The system may further comprise a pump as a part of the water heating circuit and/or between a hot water storage tank and the primary heat exchanger and/or the heat exchanger or auxiliary heat exchanger. The system may also include an expansion vessel as a part of the water heating circuit and/or between the primary heat exchanger and/or the heat exchanger or auxiliary heat exchanger and a hot water storage tank and/or in the water inlet passage leading from the heat transfer passage. The system may comprise a safety valve as a part of the water heating circuit and/or between the heat transfer passage in the primary heat exchanger and/or the heat exchanger or auxiliary heat exchanger and the hot water storage tank and/or in the water inlet passage leading from the heat transfer passage. The system may also include a filling point, for instance a valve, as a part of the water heating circuit and/or between the heat transfer passage in the primary or auxiliary heat exchanger and the hot water storage tank and/or in the water inlet passage leading from the heat transfer passage.

The heat exchanger or auxiliary heat exchanger may be provided above the burner unit. The exhaust gas outlet may lead from the burner unit, through the heat exchanger or auxiliary heat exchanger and out to the atmosphere external to a building in which the system is used.

The heat exchanger or auxiliary heat exchanger may comprise a plurality of plates arranged in a stack, the plates having chambers extending along their length within the plates in which the fluid, preferably water, to be heated can flow. The heat exchanger or auxiliary heat exchanger may further comprise a baffle plate positioned towards the centre of the plates and orientated substantially at right angles to the plates to divide the heat exchanger or auxiliary heat exchanger into two parts. The heat exchanger or auxiliary heat exchanger may be provided with spacers by which adjacent plates in the stack may be held apart, e.g. to define spaces along which the exhaust gases can flow so as to exchange heat with the fluid to be heated through the walls of the plates. The baffle plate may divide the passage through the heat exchanger or auxiliary heat exchanger, for example thereby forcing gases in one direction towards the plates on entry, e.g. with that direction then being reversed before the exhaust gases can exit the heat exchanger or auxiliary heat exchanger.

The heat exchanger or auxiliary heat exchanger may comprise a passage through which water passes and around which the exhaust gases pass. One or more such passages may be provided within the heat exchanger or auxiliary heat exchanger. One or more passages having a convoluted passage may be provided. One or more helical or coiled passageways may be provided.

The heat transfer passage in the heat exchanger or auxiliary heat exchanger preferably provides for the passage of heat from the hot exhaust gases to the cooler water. The heat exchanger or auxiliary heat exchanger may be provided with a collector for water condensing from the exhaust gases. The collector may be connected to the hot water storage tank. An acidity regulator may be provided in conjunction with the collector.

The water heating system may also comprise a space heating system. The space heating system may be arranged to heat air within a building. The water circulation circuit for the space heating system may be separate to the water circuit for the water heating system. The space heating system may include a burner unit provided with a space heating system cold water inlet. The space heating system may include a burner unit provided with a space heating system hot water outlet.

The space heating system may include a burner unit connected to a space heating system cold water inlet passage, particularly via a space heating system cold water inlet. The space heating system cold water inlet passage may be connected to one or more radiators. The space heating system may include a burner unit connected to a space heating system hot water outlet passage, particularly via a space heating system hot water outlet. The space heating system hot water outlet passage may be connected to one or more radiators. The space heating system cold water inlet passage, space heating system hot water outlet passage and one or more radiators may provide a space heating circuit. The space heating circuit may be connected to a water supply, for instance through a filling point. The filling point may comprise a valve. A drainage point may be provided, for instance a drain tap. A by-pass may be provided for one or more or all of the radiators. The space heating circuit may be a closed circuit.

A fourth aspect of the invention provides a heat exchanger or auxiliary heat exchanger, e.g. for use in the aforementioned heating system, the heat exchanger having one or more first passageways for exhaust gas, one or more second passageways for water and one or more third passageways for water or air, the first passageways being in heat transfer contact with the second passageways and with the third passageways, wherein the first passageways are adapted for connection to an exhaust gas outlet of a burner and, optionally, the third passageways may be adapted for connection to an air inlet of the burner.

A fifth aspect of the invention provides a method of heating water, the method comprising the steps of:
providing a heat source or burner unit connected to a fuel source;
activating the heat source or burning the fuel, e.g. in the burner;
passing the exhaust gases from the heat source or the burning of the fuel to one or more first passageways of a heat exchanger;
transferring heat from exhaust gas in one or more of the first passageways to water in one or more second passageways of the heat exchanger;
transferring heat from exhaust gas in one or more of the first passageways to fluid or water or air in one or more third passageways of the heat exchanger; and, optionally,
introducing the heated air into an air inlet of the heat source or burner.

The step of transferring heat from exhaust gas in the one or more first passageways to water in one or more of the second passageways is preferably done prior to the transferring of heat from exhaust gas in the one or more first passageways to air in the one or more third passageways. More preferably, the method further comprises the steps of passing the exhaust gases to one or more exhaust gas passageways of a primary heat exchanger prior to passing the exhaust gases to the one or more first passageways and/or transferring heat from the exhaust gas in one or more of the exhaust gas passageways of the primary heat exchanger to water in one or more water passageways of the primary heat exchanger.

According to a sixth aspect there is provided a kit, e.g. retrofit kit for upgrading an existing heating system to provide a heating system, the kit comprising:
a heat exchanger, e.g. an auxiliary heat exchanger;
a connector for attaching the heat exchanger or auxiliary heat exchanger to the exhaust gas outlet from a burner unit;
a gas connector for attaching the heat exchanger or auxiliary heat exchanger to the exhaust gas outlet leading to atmosphere;
a water connector for attaching the heat exchanger or auxiliary heat exchanger to a water supply leading from a hot water storage tank;
a further water connector for attaching the heat exchanger or auxiliary heat exchanger to a water outlet leading from the heat exchanger or auxiliary heat exchanger to a hot water storage tank.

The kit may further comprise instructions and/or drawings describing the connection of the heat exchanger to the exhaust gas outlet from a burner unit.

The kit may include pipe work for connecting the heat exchanger to the exhaust gas outlet from a burner unit and/or to the exhaust gas vent. The kit may include a water pump and/or expansion vessel and/or safety valve and/or filling point or filling valve. The kit may include a hot water storage location, such as a tank. The hot water storage tank may be provided with a water outlet passage for connection to a heat transfer passage in the heat exchanger. The hot water storage tank may be provided with a water inlet to the hot water storage tank for connection to a heat transfer passage in the heat exchanger.

The kit may include a heat transfer passage within the hot water storage tank. The kit may include a heat transfer passage for insertion into a hot water storage tank. The kit may further include a burner unit. The kit may pipework for connecting the burner unit to a hot water storage. The kit may include a water pump for circulating water between the burner unit and the hot water storage tank. The kit may include one or more radiators. The kit may include pipework for connecting the one or more radiators to the burner unit.

Any one or more of the aspects of the invention may include any of the options, features or possibilities set out elsewhere within this document, including those of the other aspects of the invention and the options, features and possibilities provided therefor.

Embodiments of the invention will now be described by way of example only with reference to the accompanying drawings in which:
Figure 1 illustrates a heating system according to one embodiment the invention;
Figure 2 is a schematic of the heat exchanger of the heating system of Figure 1;
Figure 2A is a schematic of an alternative heat exchanger to that of Figure 2;
Figure 2B is a schematic of an alternative heat exchanger to those of Figures 2 and 2A;
Figure 2C is a schematic of an alternative heat exchanger to those of Figures 2, 2A and 2B;
Figure 2D is a side view of the intermediary unit of the heat exchanger of Figure 2C;
Figure 2E is a front view of an alternative intermediary unit of the heat exchanger of Figure 2C;

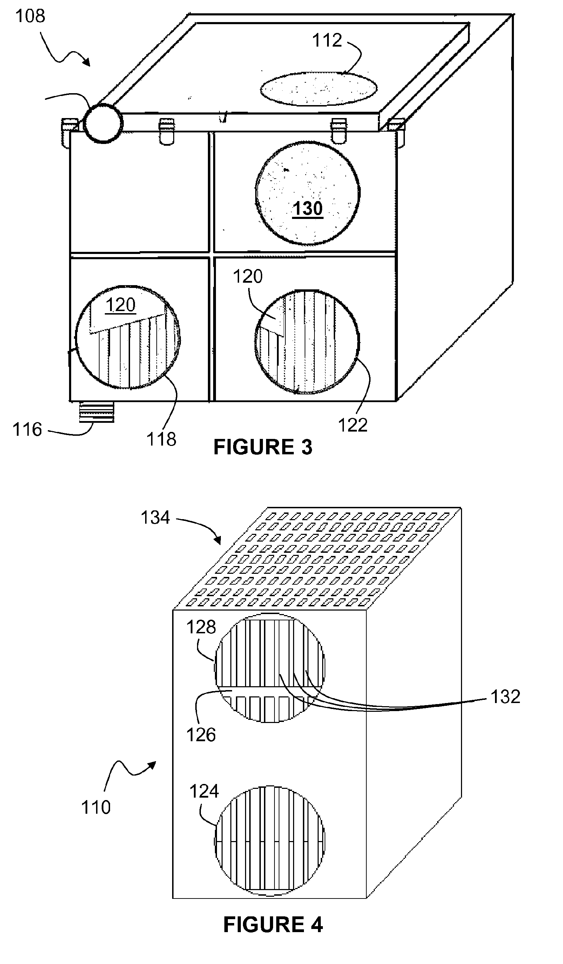

Figure 3 is a perspective view of the secondary heat exchange unit of the heat exchanger of Figure 2;
Figure 4 is a perspective view of the tertiary heat exchange unit of the heat exchanger of Figure 2 but with the baffle configured to extend downwardly;
Figure 5 is a similar view to that of Figure 4 with the front cover plate of the tertiary heat exchange unit removed to show the stack of plates;
Figure 6 is a side section view showing the path of air flow through the tertiary heat exchange unit of Figures 4 and 5;
Figure 7 is a perspective view of a tertiary heat exchange unit of a heat exchanger according to a second embodiment of the invention;
Figure 8 is a similar view to that of Figure 7 with the front cover plate of the tertiary heat exchange unit removed to show the stack of plates;
Figure 9 is a side section view showing the path of air flow through the tertiary heat exchange unit of Figures 7 and 8;
Figure 10 is a plan view of the baffle plate of the heat exchanger of Figures 7 to 9;
Figure 11 is a schematic of a heat exchanger according to a further embodiment of the invention;
Figure 12 is a schematic of a heating system according to yet a further embodiment of the invention; and
Figure 13 is a perspective view of the integrated heat exchanger of the heating system of Figure 12.

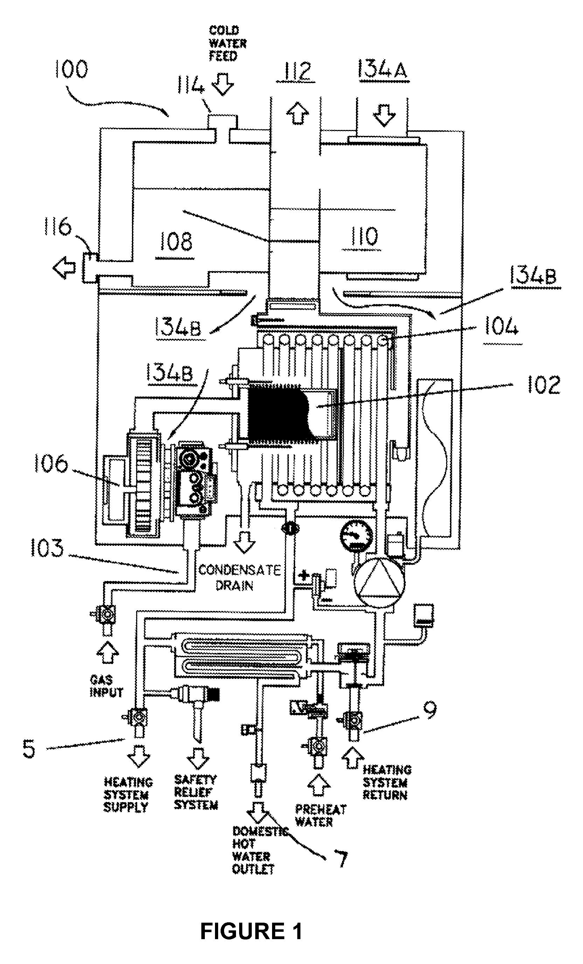

In the embodiment of the invention shown in Figure 1, a boiler 100 is provided. Fuel is fed to a burner 102 via gas inlet 103 on demand and is burned with air 134B to generate heat powered by a fan 106. The hot exhaust gases heat water within the primary heat exchanger 104 which is directly after the burner 102. The hot gases generated in the combustion process leave the top of the heat exchanger through the exhaust, before passing through secondary heat exchanger 108, tertiary heat exchanger 110 and then on to the further exhaust pipe 112 which conveys the exhaust fumes out of the building in which the system is provided. The secondary and tertiary heat exchangers 108, 100 together form an auxiliary heat exchanger.

The space heating system is provided with hot water via outlet 5 and receives the cooler returned water from the space heating system through inlet 9. The hot water system, not shown, is provided with hot water via outlet 7.

Water enters through secondary heat exchanger mains water inlet 114, passes through multiple parallel passageways, whose walls are heated by contact with the hot exhaust gases from the combustion within the burner 102, so leading to the water being heated by those gases. In the space heating mode, these gases are around 50°C, whilst in hot water generating mode, the gases are of higher temperature due to the greater fuel input in that mode. The water is conveyed from the secondary heat exchanger 108 by secondary heat exchanger mains water preheat outlet 116. The heated water may be used directly and/or stored before use, for instance in a hot water storage tank. Various open and closed circuit possibilities exist for conveying the water away from the secondary heat exchanger 108 to the hot water storage and back again. Hence, heat is recovered from the exhaust gases, where it would otherwise be wasted by release to the atmosphere, and is retained within the storage tank or additional tanks, not shown. Furthermore, the heat retained in this way builds up and generates a significant volume of warm water in its own right which can be used for showering and the like, even if there is no heating of this part of the water by passing it over the flame in the burner 102.

Within the secondary heat exchanger 108, the hot exhaust gases enter through secondary heat exchanger gas inlet 118 and then follow a generally U shaped flow path while baffles 120 cause the exhaust gases to flow across the secondary heat exchanger 108 before sweeping around to the back of the secondary heat exchanger 108 and then back parallel to the original flow direction, before exiting through secondary heat exchanger gas outlet 122.

Because the heat is extracted from the exhaust fumes using a dedicated circuit, that circuit operates during both space heating only mode and during hot water generating mode. This means that efficiency is increased in both modes and greater heat is recovered. This compares with prior art systems in which the cold water on its way to the boiler to form directly the hot water demanded, is heated within the heat exchanger. By definition this can only occur in the hot water mode as only then is there water going through the heat exchanger. Furthermore, in this case, because the stored water in the heat exchanger passes through the heat exchanger when there is a domestic hot water demand, or when it remains static, it increases the heat in the relevant part of the storage tank to a considerable degree and is of a useful temperature in its own right. This contrast with the single short pass of the prior art which may warm the cold feed by a few degrees, but does not achieve useable warm water in its own right.

The system works particularly well with a pressurised exhaust (premix), but heat exchanger designs with such a low resistance that they work on non-pressurised exhausts are available, including the design of EP0945688. Whilst a fan is provided within the exhaust stream to assist flow in this embodiment, it will be appreciated that other embodiments may not include such a fan. Because the approach of the present invention removes a significant amount of the heat in the exhaust fumes, it has the beneficial effect of reducing or even eliminating "pluming" at the exhaust outlet from the building. "Pluming" is observed where the hot exhaust gases mix with the cold ambient air. This can give the mistaken appearance of steaming from the boiler flue. The present invention provides a further reduction in "pluming" by reducing the temperature of the final exhaust gases using the tertiary heat exchanger 110. The heat recovered is beneficially used to pre-heat the feed air used in the burner 102 for combustion. Even after passage through the secondary heat exchanger 108, the exhaust gases still possess a significant amount of energy due to their temperature. Instead of venting the exhaust fumes through a plain passageway to the atmosphere outside the building the boiler 100 is located in, the invention makes further use of the heat.

The secondary heat exchanger gas outlet 122 is connected to the tertiary heat exchanger gas inlet 124 so that after exiting the secondary heat exchanger 108, the exhaust gases are directed into the tertiary heat exchanger 110. This tertiary heat exchanger 110 is provided adjacent the secondary heat exchanger 108 in this embodiment. The tertiary heat exchanger 110 is configured such that exhaust gases entering through the gas inlet 124 at the side thereof may be deflected by a baffle 126 downward into the bottom part of the tertiary heat exchanger 110.

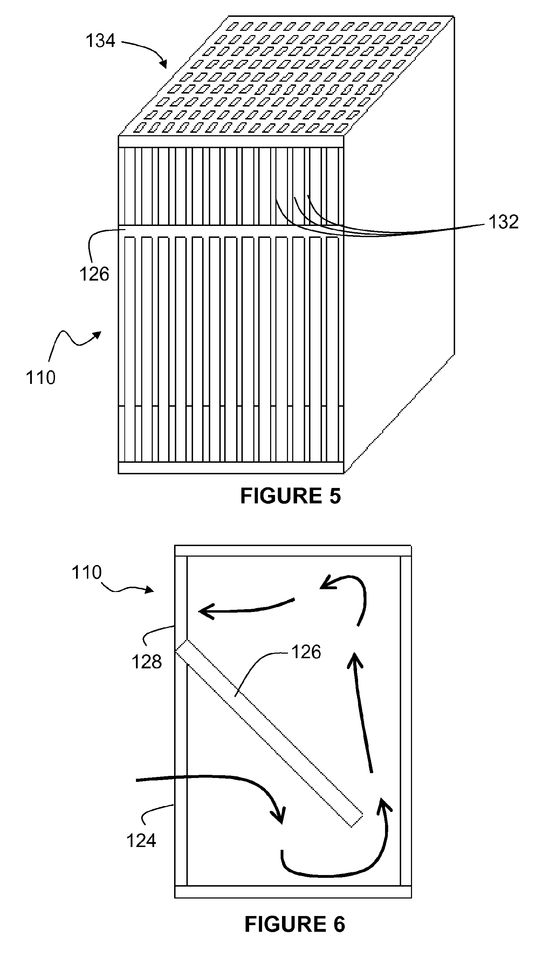

The different angles of the baffle 126 shown in Figures 1 and 6 illustrate two of the possible orientations. However, in practice the angle of the baffle 126 is selected to provide a balance between forcing the exhaust gases to follow a tortuous path for optimum heat exchange efficiency and minimising the pressure drop to allow passage of the gases. The exhaust gases flow around the end of the baffle 126 and then back along the upper part of the tertiary heat exchanger 110 to the tertiary heat exchanger gas outlet 128. From the tertiary heat exchanger gas outlet 128, the now relatively cool exhaust gases pass through a passageway 130 forming a ninety degree bend and are vented from the exhaust pipe 112 at the top and to the atmosphere outside of the building holding the boiler 100.

The use of the tertiary heat exchanger 110 enables the contact between the exhaust gases and the feed air to be made without any disruption or changes to the passageway 130 extending between the limits of the boiler 100 and the outlet to the atmosphere. There is no need to increase the diameter of this passageway, for instance, or provide concentric arrangements for the passageway 130 within a feed air inlet passageway, for instance. Controlled and optimised contact between the exhaust gases and the feed air is thus provided to achieve heat exchange.

Within the tertiary heat exchanger 110, the exhaust gases heat the walls of plates 132 which include passageways through which the feed air is passing. The feed air is drawn in through feed air inlet 134a and exits through the feed air outlet 134b. After heating, the feed air passes to the burner 102. It has been observed that the use of the secondary heat exchanger 108 provides for approximately 10.4% saving in domestic hot water and 30% overall savings on fuel consumption for a given heating program when compare with prior art systems which do not recover heat from the exhaust gases in a secondary heat exchanger 108.

The subsequent use of the tertiary heat exchanger 110 to heat the feed air lifts the temperature of that air significantly. Feed air entering the system at 19° is heated to around 30° to 60° when the system is operating in the space heating only mode. An increase in the exhaust gas temperature, due to a switch to hot water generating mode, results in even greater heating of the feed air, to around 45°. It has also been observed that the improved efficiency is increased even further where the feed air temperature on entering the boiler 100 is appreciably lower, say 10°C. It will be appreciated by those skilled in the art that this is due to the greater temperature differential between the exhaust gases and the inlet air, which increases the rate of heat transfer. The principal benefit, however, is in terms of the heated air giving an increase in boiler efficiency compared with one in which the ambient temperature air is fed direct to the burner 102.

In terms of the exhaust gas temperatures, the exhaust fumes may have a temperature of around 75° as they leave the primary heat exchanger 104, 45° as they leave the secondary heat exchanger 108 and around 20° as they leave the tertiary heat exchanger 110. Clearly, the use of the tertiary heat exchanger 110 for feed air heating is the optimum choice. Another possibility would be to heat the feed air using the primary heat exchanger fumes 104 direct to the tertiary heat exchanger 110, setting up this process so as to provide successful operation in space heating only mode and increasing further the effective operation generating mode due to the greater inlet air.

The heating of the inlet air is a balancing act, to an extent, heating to too high a temperature reduces the power of the boiler as there is less oxygen for the combustion process in a given volume of feed air. Whilst not beyond the scope of the invention, feed air heating using the secondary heat exchanger 108 is more wasteful than using a tertiary heat exchanger. Whilst this arrangement provides more effective feed air heating, the lower temperature of the exhaust gas provides minimal heating of the water after it has been used to heat the feed air. Hence, it is preferable to have the feed air heated after the water, although this can be before.

The use of the primary heat exchanger 104 to heat the water for the space heating only mode and the water in hot water generating mode, the use of the secondary heat exchanger 108 to recover heat into the water for use as hot water and the use of the tertiary heat exchanger 110 to heat the feed air is believed to represent an optimised order. More specifically, this arrangement maximises heat recovery from the exhaust gases, with all of that heat recovery having a useful purpose. It is also easier to provide the heat exchanger for use as a tertiary heat exchanger to recover heat to the feed air, as the temperatures involved are sufficiently low to enable aluminium heat exchangers to be used. These are less expensive to produce and easier to manufacture than, for example, stainless steel heat exchangers. Stainless steel heat exchangers are generally used for the primary heat exchanger 104 due to the high temperatures encountered.

The benefits of the present invention, in terms of the improved efficiency arising from the increase in burner feed air are shown in the following table

| Situation | Heating Flow Temp (°C) | Burner Exhaust Gas Temp (°C) | Secondary HX Exit Gas Temp (°C) | Feed Air Tertiary HX Entry Temp (°C) | Feed Air Burner Entry Temp (°C) | Combustion Efficiency |
|---|---|---|---|---|---|---|
| Space heating only mode - no secondary or tertiary HX | 43 | 50 | not applicable | not applicable | 19 | 98.4438 |
| Hot water generating mode - no secondary or tertiary HX | 75.3 | 69 | not applicable | not applicable | 19 | 97.4900 |
| Space heating only mode - secondary HX - no tertiary HX | 42 | 50 | 35 | not applicable | 22 | 99.3474 |
| Space heating only mode - secondary and tertiary HX | 41.8 | 50 | 34 | 19 | 28 | 99.6988 |
| Space heating only mode - secondary and larger tertiary HX | 41.6 | 50 | 36 | 19.5 | 31 | 99.9498 |
| Hot water mode - secondary and larger tertiary HX | 69.5 | 68 | 54 | 19 | 42 | 99.5231 |

The space heating only mode improves with the introduction of the secondary heat exchanger which removes heat from the exhaust to water. The space heating mode improves still further with the introduction of the tertiary heat exchanger and then still further with the use of a larger tertiary heat exchanger. The hot water generating mode also improves over the base version when a secondary heat exchanger and tertiary heat exchanger are introduced.

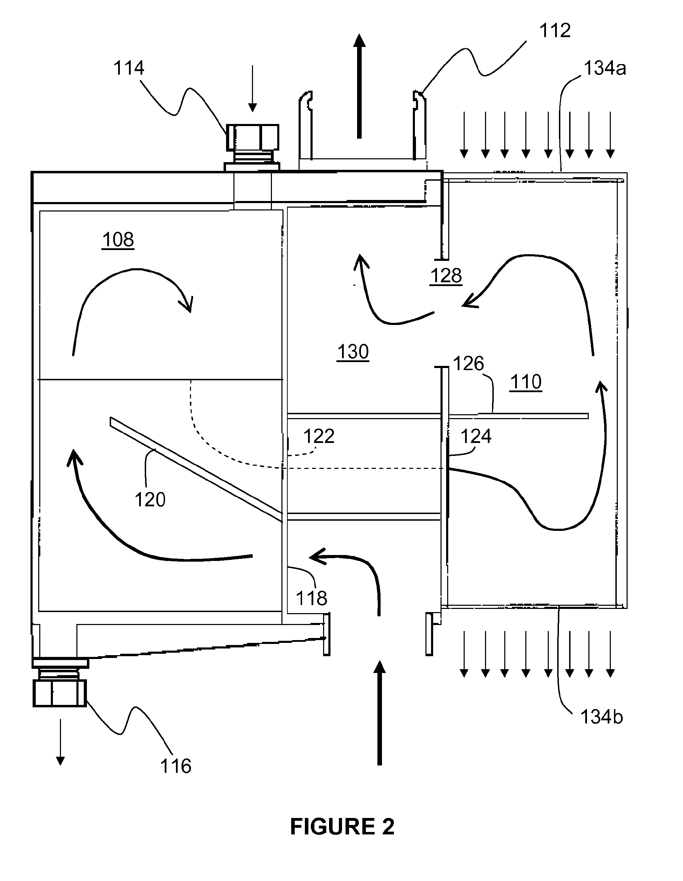

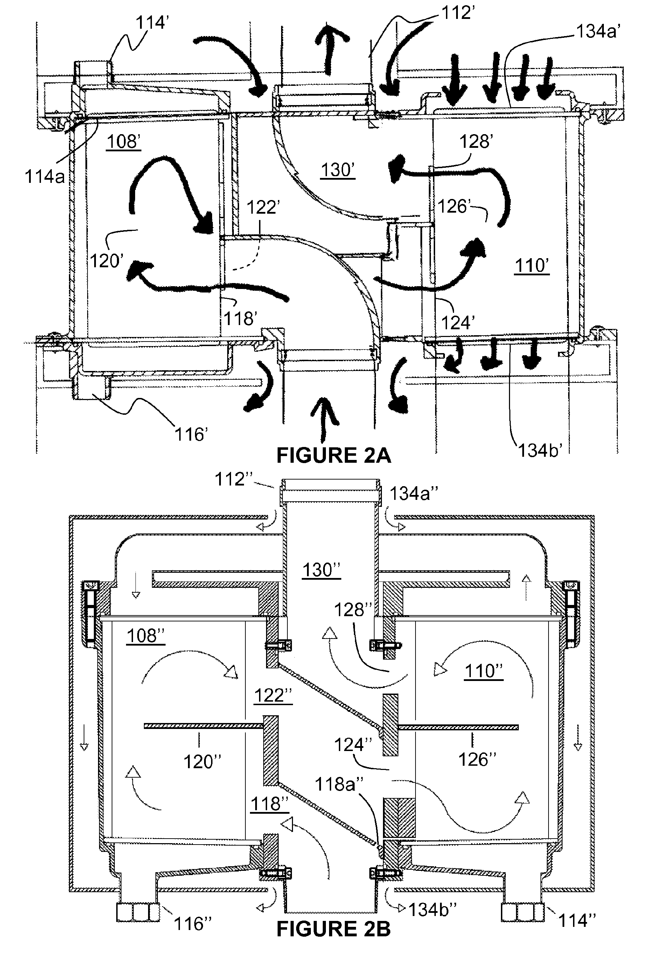

In the embodiment described above, the secondary 108 and tertiary 110 heat exchangers are provided in heat exchange contact i.e. with a common face. It is also possible to provide them as separate units as shown in Figure 2A, wherein like references represent like features but with the addition of a " ' ". This arrangement enables different configurations to make use of different space availability where the system is to be used. Moreover, by providing a space between the secondary 108' and tertiary 110' heat exchangers as shown in the embodiment of Figure 2A, this enables the inlet air for the burner 102 to be drawn into the heating system around the exhaust ducts 112', 130' as well as through the tertiary heat exchanger 110'. The inherent losses associated with using separate units 108', 110' is thereby reclaimed by heating further the inlet air for the burner 102. The heat exchange units 108', 110' also include an air intake seal 114a, e.g. a closed air intake seal 114a, which may also be included in the embodiment previously described. The seal 114a forces the inlet air for the burner 102 to be drawn in through the space between the units 108', 110' to maximise the aforementioned heat transfer between the exhaust ducts 112', 130' and the inlet air.

A further embodiment is shown in Figure 2B, wherein like references represent like features but with the addition of a " " ". In this arrangement, the tertiary heat exchanger 110" is a water heat exchanger with an inlet 114" at its base and an outlet at its top that is fluidly connected to an inlet at the top of the secondary heat exchanger 108". This arrangement provides more effective heat extraction from the exhaust gases into the water than arrangements with only a secondary water heat exchanger 108". The intermediary section that interconnects the exhaust inlet from the burner is also a generally box section in this embodiment with baffles for diverting the flow to cause the aforementioned ninety degree bends. Each of these baffles includes a drainage port 118a" to allow condensate to flow back down into the boiler.

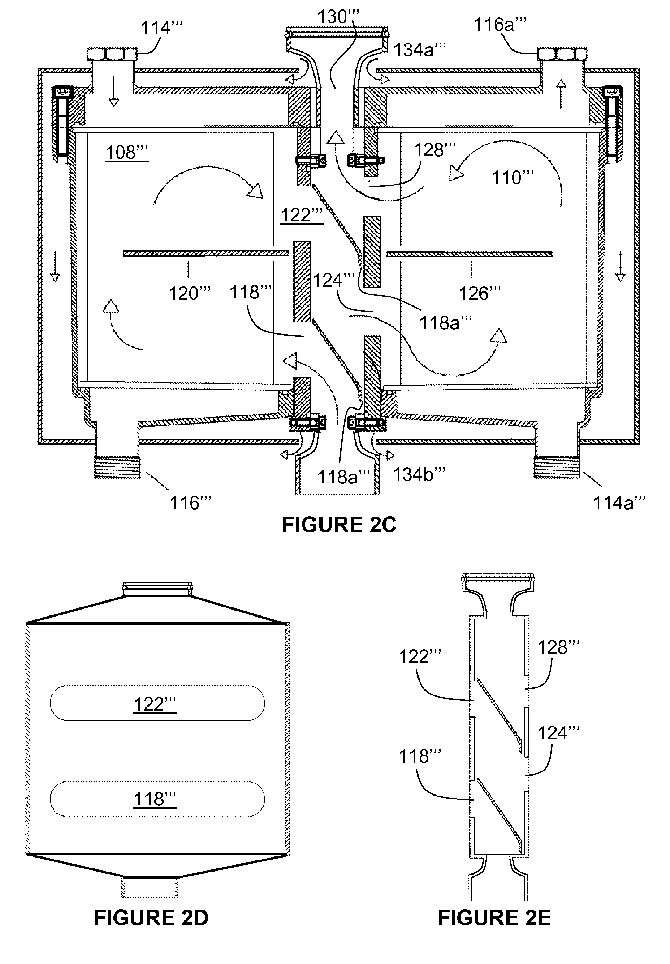

A yet further embodiment is shown in Figure 2C, wherein like references represent like features but with the addition of a " "' ". As with the embodiment of Figure 2B, the tertiary heat exchanger 110"' of this embodiment is a water heat exchanger. However, this tertiary heat exchanger 110"' includes an inlet fitting 114a"' at its base and an outlet fitting 116a"' at its top. The intermediary section is also more compact in this arrangement with a thickness or width of less than 50mm, preferably less than 30mm, more preferably less than 20mm and most preferably about 10mm.

It will be appreciated that this arrangement provides additional flexibility in that the exhaust gases may be used to heat two different water sources or even a water source and a glycol source. For example, the secondary heat exchanger 108"' may be used to pre-heat water prior to its introduction into the primary heat exchanger 104 while the other may be used for underfloor heating or some other application.

Figure 2D shows a side view of the intermediary section of the arrangement of Figure 2C, which shows a gradual widening of the path for the exhaust gas from the circular inlet of the intermediate section to the gas inlet 118"' that feeds the secondary heat exchanger 110"'. This gradual transition is intended to minimise the flow restriction caused by the tortuous path that the exhaust gasses must take to flow around the baffles 120"', 126"'.

Figure 2E shows an alternative embodiment in which the intermediary section could be injection moulded. It will be appreciated by those skilled in the art that the moulding would be formed in two or more parts which are subsequently connected or bonded together. It is envisaged that alternatively the intermediary section may be formed of one or more injection moulded components in combination with components fabricated from different methods or materials, e.g. formed sheet metal or the like.

It is also envisaged that the transition may be provided by a first duct that is formed to have a ninety degree bend that incorporates the gradual transition from a circular cross-section to a thin elongate cross-section to feed the gas inlet 118"'. It is also envisaged that a similar second duct may be provided for the transition from the tertiary heat exchanger gas outlet 128"' to the exhaust passageway 130"'.

It is further envisaged that the auxiliary heat exchanger may include a reservoir at or adjacent its base into which reservoir the exhaust condensate collects. The base of one or both of the secondary and/or tertiary heat exchangers may be located within the reservoir to recover further heat from the condensate.

It is also possible to provide the primary 104, secondary 108 and tertiary 110 heat exchangers in a common and/or integral unit. In such an arrangement, a fan may be provided to remove the exhaust gases from the burner 1, e.g. in a downward direction, and hence through the primary heat exchanger 104. The exhaust gases could then pass up through the secondary heat exchanger 108 and then down or sideways through the tertiary heat exchanger 110.

The primary and/or tertiary heat exchangers 104, 110 may also be provided with a drainage channel to allow the removal of exhaust gas condensate, should that arise as the exhaust gas temperature is lowered.

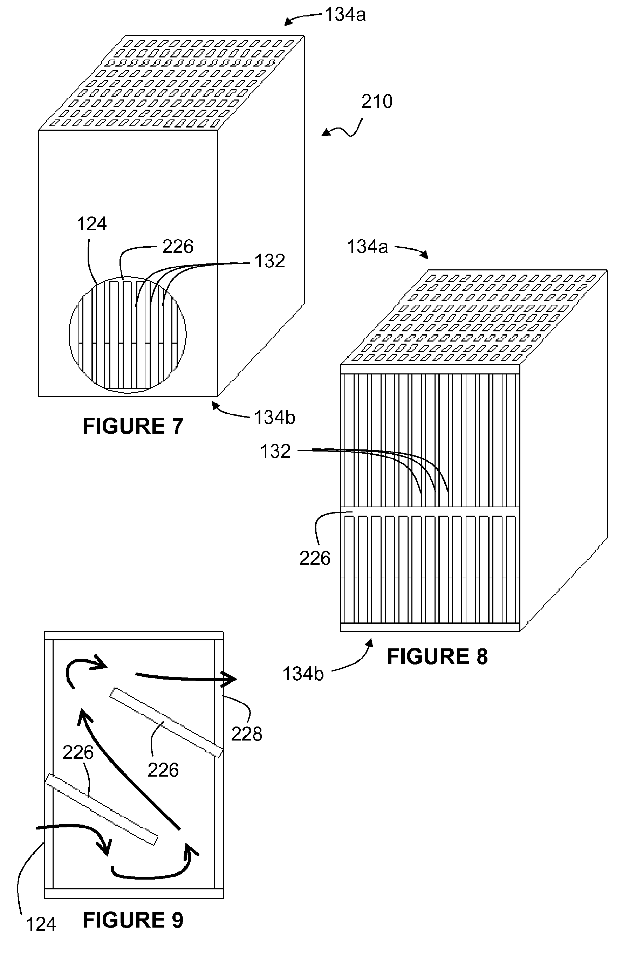

Referring now to Figures 7 to 9, there is shown an alternative tertiary heat exchanger 210 which is similar to the tertiary heat exchanger 110 described above, wherein like reference numbers represent like features. However, this tertiary heat exchanger 210 is differentiated by the exhaust gas outlet 228 being located on its rear wall, wherein the baffle 126 is replaced by a pair of opposed smaller baffles 226, one of which extends downwardly from above the inlet 124, as was the case with the larger baffle 126, while the other extends upwardly from the opposite wall as shown more clearly in Figure 9. This arrangement provides a longer and more tortuous path for the exhaust gases, thereby resulting in improved heat exchange efficiency. It will be appreciated that the outlet 228 in this embodiment is connected to the further exhaust pipe 112 by different means to the passageway 130 shown in the previous Figures.

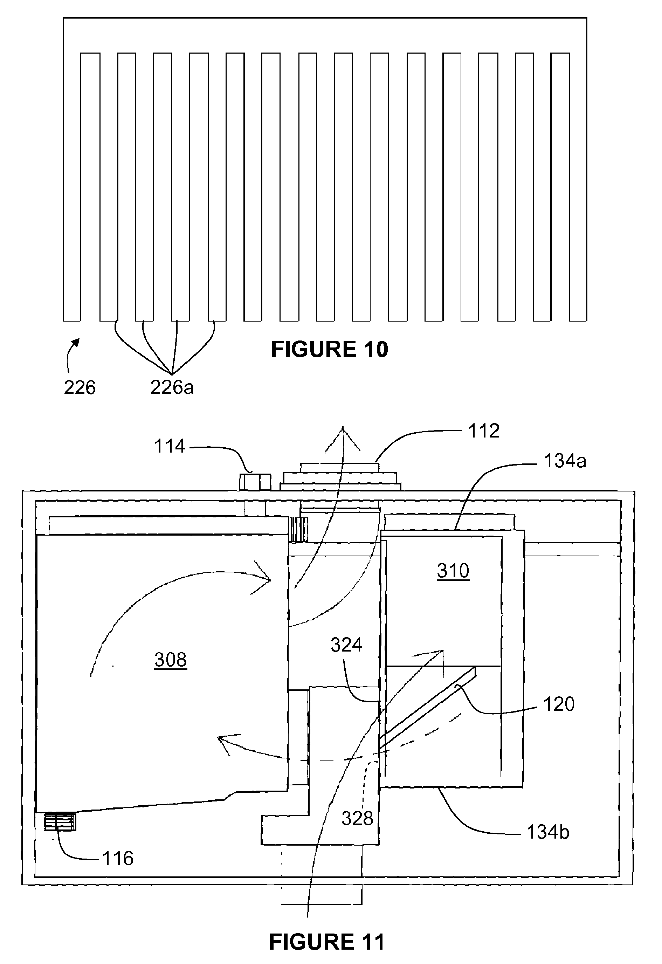

Figure 10 shows a plan view of one of the baffles 226, which is in the form of a plate with fingers 226a in this embodiment. As shown in Figures 7 to 9, the fingers 226a extend between adjacent plates 132 of the primary heat exchanger. It will be appreciated that the aforementioned baffles 120 and 126 also include these features (not shown). Of course other baffle designs are envisaged without departing from the scope of the invention.

Figure 11 shows an alternative heat exchanger configuration, wherein the features of this arrangement are similar to those of previous embodiments described above and like reference numbers represent like features. In this embodiment, the exhaust gases enter an air heat exchanger 310 before entering a water heat exchanger 308. The air heat exchanger 310 includes a similar baffle arrangement 326 to that of the secondary heat exchanger 108 of the first embodiment. More specifically, the exhaust gases enter the gas inlet 324 and then follow a generally U shaped flow path while baffles 326 cause the exhaust gases to flow across the air heat exchanger 310 before sweeping around the end thereof and then back parallel to the original flow direction, before exiting through air heat exchanger gas outlet 328.

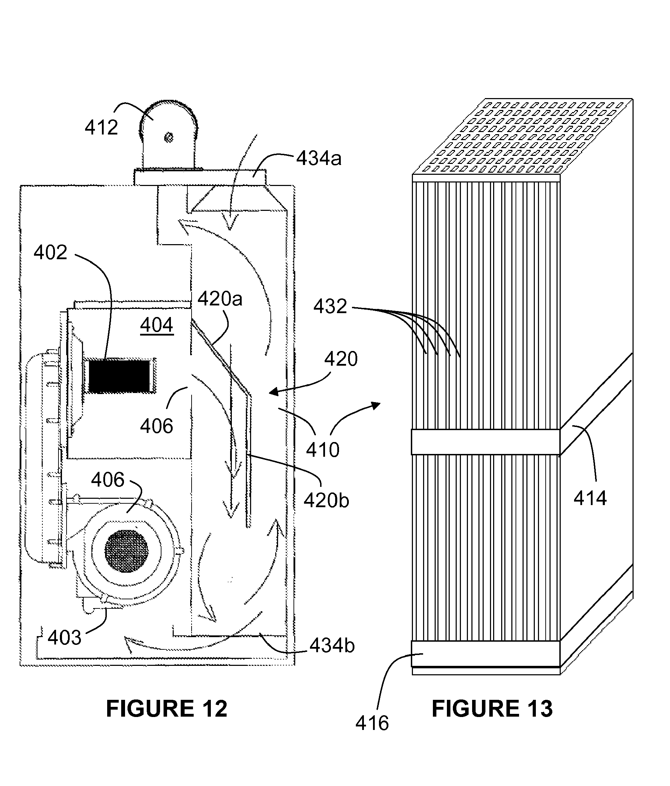

Figures 12 and 13 show an alternative heating system to that of Figure 1, wherein fuel and air are fed to a burner 402 through a fuel inlet (not shown) and an air inlet 403 respectively and the fuel is burned to generate heat. A fan 406 is provided between the air inlet 403 and the burner 402 to force circulation of the air through the burner 402. The hot exhaust gases heat water within the primary heat exchanger 404 which surrounds the burner 402. The hot gases generated in the combustion process leave the burner 402 through exhaust outlet 406 before passing through an integrated heat exchanger 410 and then on to the further exhaust pipe 412 which conveys the exhaust fumes out of the building in which the system is provided.

In this embodiment, the integrated heat exchanger 410 is formed of a series of plates 432 arranged in a stack to form a plurality of exhaust gas passageways and air passageways which are in heat transfer contact with one another. The heat exchanger 410 includes a pair of water manifolds 414, 416 each having a respective water inlet (not shown) and outlet (not shown), a baffle 420, an air inlet 434a at the top of the heat exchanger 410 and an air outlet 434b at the bottom thereof which feeds heated air into the air inlet 403 of the fan 406. The baffle 420 includes a first portion 420a which extends downwardly at an angle from above the exhaust outlet 406 of the burner 402 and a second portion 420b which extends downwardly from the lower end of the first portion 420a in a substantially vertical direction. Exhaust gases entering the heat exchanger 410 from the exhaust gas outlet 406 are therefore diverted toward the bottom of the heat exchanger 410 by the baffle 420 before turning back and travelling vertically upward to form a substantially U-shaped flow path prior to exiting via the further exhaust pipe 412.

The water manifolds 414, 416 are incorporated into a lower portion of the heat exchanger 410, immediately below the exhaust gas outlet 406. Thus, heat is transferred from the hot exhaust gases through the plates 432 and into the water in the water manifolds 414, 416 immediately after exiting the exhaust gas outlet 406. Simultaneously and subsequently, heat is transferred to the air within the air passageways. This arrangement is configured to minimise heat loss, thereby maximising efficiency.

It will be appreciated by those skilled in the art that several variations to any of the features described in the embodiments described herein are envisaged without departing from the scope of the invention. Moreover, any number of combinations of the aforementioned features and/or those shown in the appended drawings provide clear advantages over the prior art and are therefore within the scope of the invention described herein.

## Claims

1. A water heating system comprising:
a burner unit with an exhaust gas outlet;
a primary heat exchanger with one or more primary passageways for water, the primary heat exchanger being located and/or configured to be heated, in use, by the burner unit; and
an auxiliary heat exchanger having one or more first passageways for exhaust gas, one or more second passageways for water and one or more third passageways for liquid or water or air;
wherein the one or more first passageways are connected to the exhaust gas outlet and are in heat transfer contact with the one or more second passageways and with the one or more third passageways.

2. Heating system according to claim 1, wherein the one or more first passageways are in heat transfer contact with the one or more second passageways upstream of the heat transfer contact between the first and third passageways.

3. Heating system according to claim 2, wherein the auxiliary heat exchanger comprises:
a secondary heat exchange unit including the one or more second passageways and a portion of the one or more first passageways; and
a tertiary heat exchange unit including the one or more third passageways and a portion of the one or more first passageway or passageways.

4. Heating system according to claim 3, wherein the first passageway portion or portions of the secondary heat exchange unit is or are connected to the first passageway portion or portions of the tertiary heat exchange unit by or via an intermediary unit.

5. Heating system according to claim 4, wherein the intermediary unit comprises a first section connecting the exhaust gas outlet to an inlet of the first passageway portion or portions of the secondary heat exchange unit.

6. Heating system according to claim 4 or claim 5, wherein the intermediary unit comprises a second section connecting an outlet of the first passageway portion or portions of the secondary heat exchange unit to an inlet of the first passageway portion or portions of the tertiary heat exchange unit.

7. Heating system according to any one of claims 4 to 6, wherein the intermediary unit comprises a third section connecting an outlet of the first passageway portion or portions of the tertiary heat exchange unit to the outside of the auxiliary heat exchanger.

8. Heating system according to any one of claims 4 to 7, wherein the intermediary unit comprises one or more ports for allowing the removal of exhaust gas condensate.

9. Heating system according to claim 8 further comprising a drainage diverting means for causing, in use, exhaust gas condensate to flow toward the one or more ports.

10. Heating system according to any one of claims 3 to 9, wherein the second passageways are connected to the third passageways.

11. Heating system according to any one of claims 1 to 10, wherein the burner unit comprises an air inlet to which the third passageways are connected.

12. Heat system according to any preceding claim further comprising one or more baffles for diverting fluid flow within one or more of the passageways.

13. Heating system according to any preceding claim, wherein one or more of the passageways are formed by a plurality of plates arranged in a stack.

14. Heat system according to claim 13 when dependent on claim 12, wherein the baffle comprises a baffle plate with fingers which extend between adjacent plates.

15. An auxiliary heat exchanger for a water heating system according to any preceding claim, the auxiliary heat exchanger comprising the one or more first passageways for exhaust gas, the one or more second passageways for water and the one or more third passageways for liquid or water or air, wherein the one or more first passageways are connectable to the exhaust gas outlet of the system and are in heat transfer contact with the second passageways and with the third passageways.
